(19) Europäisches Patentamt
European Patent Office
Office européen des brevets

(11) **EP 4 261 914 A1**

(12) # EUROPEAN PATENT APPLICATION
published in accordance with Art. 153(4) EPC

(43) Date of publication:
**18.10.2023 Bulletin 2023/42**

(21) Application number: **22842502.1**

(22) Date of filing: **15.07.2022**

(51) International Patent Classification (IPC):
**H01M 4/04** (2006.01) **H01M 10/42** (2006.01)
**B05C 11/10** (2006.01) **H01M 4/02** (2006.01)

(52) Cooperative Patent Classification (CPC):
**B05C 11/10; H01M 4/02; H01M 4/04; H01M 10/42;**
Y02E 60/10; Y02P 70/50

(86) International application number:
**PCT/KR2022/010348**

(87) International publication number:
**WO 2023/287240 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.07.2021 KR 20210092788**

(71) Applicant: **LG Energy Solution, Ltd.**
**Seoul 07335 (KR)**

(72) Inventors:
• **LEE, Ung Ju**
 **Daejeon 34122 (KR)**
• **YANG, Seung Gi**
 **Daejeon 34122 (KR)**
• **JEONG, Ye Eun**
 **Daejeon 34122 (KR)**
• **YOON, Sung Pil**
 **Daejeon 34122 (KR)**
• **PARK, Hyo Seok**
 **Daejeon 34122 (KR)**

(74) Representative: **Plasseraud IP**
 **66, rue de la Chaussée d'Antin**
 **75440 Paris Cedex 09 (FR)**

(54) **ELECTRODE**

(57) The present application can provide an electrode, a method of manufacturing an electrode, and a use of the electrode. The present application can provide an electrode without forming the pet edge portion while an insulating layer formed by overlapping with the active material layer in the current collector layer of the electrode effectively secures the insulation required for the electrode. In addition, even when the electrode design model is changed, the present application can provide a manufacturing method capable of manufacturing the above-described electrode by flexibly responding to the relevant change. In addition, the present application can provide a use of the electrode.

[Figure 1]

EP 4 261 914 A1

## Description

## Technical Field

This application claims the benefit of priority based on Korean Patent Application No. 10-2021-0092788 filed on July 15, 2021 and Korean Patent Application No. 10-2022-0087346 filed on July 15, 2022, the disclosures of which are incorporated herein by reference in their entirety.

The present application relates to an electrode, a method for manufacturing an electrode, and a use of the electrode.

## Background Art

As technology development and demand for mobile devices or electric vehicles, and the like increase, the demand for secondary batteries as an energy source increases.

Accordingly, many studies are conducted to be capable of meeting the above demand.

A secondary battery generally comprises an electrode assembly, in which a positive electrode and a negative electrode are laminated with a separator (separation membrane) interposed therebetween, and an electrolyte, where the electrode assembly and the electrolyte are accommodated in an exterior material.

The secondary battery may be classified into a can type, a rectangular type, and a pouch type according to the shape of the exterior material.

One of the main research tasks in secondary batteries is to improve safety. Accidents related to the safety of secondary batteries occur due to various factors, among which a representative factor is a short circuit phenomenon occurring between the positive electrode and the negative electrode.

Under normal circumstances, the separator achieves electrical insulation between the positive electrode and the negative electrode. However, in abnormal situations such as overcharge or over discharge of secondary batteries, dendritic growth of electrode materials, internal short circuits due to foreign substances, or battery penetration by sharp objects of nails and the like, the electrical insulation by the separator is damaged, whereby a problem of stability arises.

For example, when the secondary battery is exposed to high temperature, a short circuit phenomenon may occur due to shrinkage of the separator or the like. In addition, several sheets of positive and negative electrodes are usually laminated for the manufacture of the secondary battery, where in the lamination process, fine internal short circuits may occur due to sharp portions of edges of the positive and negative electrodes.

In consideration of these facts, there are various attempts to secure safety by preventing short circuits between the positive electrode and the negative electrode due to the internal or external problem of the secondary battery.

For example, Patent Document 1 discloses a method for securing insulation by using an electrode in which an insulating layer is formed to be overlapped with an active material layer on a current collector layer in some regions.

However, as disclosed in Patent Document 1, when the active material layer and the insulating layer are overlapped in some regions, a phenomenon in which the thickness of the overlapping portion becomes thicker than the thickness of the active material layer frequently occurs, and in this case, the overlapping portion is also referred to as a so-called fat edge.

If such a fat edge exists, damage to the current collector layer may occur in a rolling process of the electrode manufacturing processes, and thus safety problems may occur. In addition, as described above, in the process of laminating a plurality of positive and negative electrodes or the process of laminating positive and negative electrodes with a separator interposed therebetween, the fat edge portion may damage other electrodes or separators.

In order to solve these problems, a method of forming the insulating layer as thin as possible may be considered. However, in this case, the insulating effect by the insulating layer is greatly reduced. Also, when the insulating layer is thinly formed, the current collector layer may be exposed at an overlapping portion of the insulating layer and the active material layer. In addition, if the thickness deviation between the insulating layer and the active material layer is excessively large, the efficiency in the rolling process may also be reduced.

Therefore, it is necessary to constitute the insulating layer of the electrode so that the fat edge portion is not formed, while having an appropriate thickness capable of ensuring insulation.

The end of the active material layer formed on the current collector layer usually has an inclined surface, which is referred to as a so-called sliding portion, and the insulating layer often overlaps the inclined surface, so that the required thickness of the insulating layer may be affected by the overlapping regions. Since the thickness of the active material layer also varies depending on the loading amount of the composition (slurry) for the active material layer, the required thickness of the insulating layer is also changed accordingly.

Since the electrode design model is frequently changed due to various demands, the loading amount of the composition for the active material layer also varies for each process. Therefore, it is an uneasy task to secure an appropriate thickness of the insulating layer for each process.

[Prior Art Documents]

(Patent Document 1) International Publication No. WO2014/142458

## Disclosure

### Technical Problem

The present application can provide an electrode, a method of manufacturing an electrode, and a use of the electrode. The present application can provide an electrode without forming the fat edge portion while an insulating layer formed by overlapping with the active material layer in the current collector layer of the electrode effectively secures the insulation required for the electrode. In addition, even when the electrode design model is changed, the present application can provide a manufacturing method capable of manufacturing the above-described electrode by flexibly responding to the relevant change.

In addition, the present application can provide a use of the electrode.

### Technical Solution

In the present application, the term room temperature is a natural temperature without warming and cooling, which may mean, for example, any one temperature within the range of 10°C to 30°C, or a temperature of about 27°C or less while being about 15°C or more, about 18°C or more, about 20°C or more, or about 23°C or more, or about 25° C. Among the physical properties mentioned in the present application, when the measurement temperature affects the physical property, the relevant physical property is a physical property measured at room temperature, unless otherwise specified, and the unit of temperature in the present application is Celsius (°C), unless otherwise specified.

In the present application, the term normal pressure means a natural pressure without pressurization and depressurization, which may generally mean a pressure of about 1 atm or so. In addition, among the physical properties mentioned in the present application, when the measurement pressure affects the physical property, the relevant physical property is a physical property measured at normal pressure.

In the present application, the meaning of multiple measurements may mean that in order to derive statistically significant data, any physical property or relationship is measured at least 3 times or more, 4 times or more, 5 times or more, 6 times or more, 7 times or more, 8 times or more, 9 times or more, or 10 times or more. In addition, the multiple measurements may mean that in order to derive statistically significant data, the measurements are performed while changing a measurement target (e.g., a thickness of a layer and a length of an overlapping region, etc.).

In the present application, the statistical significance may mean a case where the $R^2$ value is 0.9 or more, 0.91 or more, 0.92 or more, 0.93 or more, 0.94 or more, 0.95 or more, 0.96 or more, 0.97 or more, or 0.98 or more, when a trend line (or trend curve) is drawn as measurement results (data). In the present application, the $R^2$ value (R squared value) is a coefficient of determination used upon the statistical analysis.

The present application relates to an electrode. In the present application, the electrode may be a so-called negative electrode (anode) or positive electrode (cathode).

The electrode of the present application may comprise a current collector layer, an electrode active material layer (may simply be referred to as an active material layer), and an insulating layer.

The active material layer and/or the insulating layer may be formed on only one side of the current collector layer, or may be formed on both sides of the current collector layer.

Here, as the current collector layer, one usually used as a current collector layer for a positive electrode or a negative electrode may be used without any particular limitation.

As long as the positive electrode current collector layer has conductivity without causing a chemical change in the applied device such as a secondary battery, the type, size, and shape thereof, and the like are not particularly limited. As the positive electrode current collector layer, for example, stainless steel, aluminum, nickel, titanium, baked carbon, or one that the surface of aluminum or stainless steel is surface-treated with carbon, nickel, titanium, silver, or the like may be used. By forming fine irregularities on the surface of the current collector layer for the positive electrode, it is also possible to increase the adhesion force of the positive electrode active material, and various forms such as a film, a sheet, a foil, a net, a porous body, a foam, and a nonwoven body are possible. In addition, the current collector layer for the positive electrode may have a thickness within a range of usually 3μm to 500μm.

As the negative electrode current collector layer has also conductivity without causing a chemical change in the applied device such as a secondary battery, the type, size and shape thereof, and the like are not particularly limited. As the negative electrode current collector layer, for example, copper, stainless steel, aluminum, nickel, titanium, baked carbon, one that the surface of copper or stainless steel is surface-treated with carbon, nickel, titanium, silver, or the like, an aluminum-cadmium alloy, and the like may be used. In addition, like the positive electrode current collector layer, by forming fine irregularities on the surface, it is also possible to strengthen the binding force of the negative electrode active material, and it may be used in various forms such as a film, a sheet, a foil, a net, a porous body, a foam, and a nonwoven body.

The current collector layer for the negative electrode may have a thickness within a range of usually 3μm to 500μm.

The active material layer may be formed of a composition for an active material layer. Therefore, the active material layer may comprise components included in the composition.

The composition for the active material layer or the active material layer may comprise an electrode active material. There is no particular limitation on the specific type of the electrode active material, and a material forming the positive electrode or the negative electrode may be used.

For example, when the active material layer is a positive electrode active material layer, the active material is not particularly limited, but may be exemplified by, for example, layered compounds such as lithium cobalt oxide ($LiCoO_2$) or lithium nickel oxide ($LiNiO_2$), or compounds substituted with one or more transition metals; lithium iron oxides such as $LiFe_3O_4$; lithium manganese oxides such as Formula $Li_{1+c1}Mn_{2-c1}O_4$ ($0 \leq c1 \leq 0.33$), $LiMnO_3$, $LiMn_2O_3$, or $LiMnO_2$; lithium copper oxides ($Li_2CuO_2$); vanadium oxides such as $LiVaOs$, $V_2O_5$, or $Cu_2V_2O_7$; Ni-site lithium nickel oxides represented by Formula $LiNi_{1-c2}M_{c2}O_2$ (where M is at least one selected from the group consisting of Co, Mn, Al, Cu, Fe, Mg, B and Ga, and $0.01 \leq c2 \leq 0.3$ is satisfied); lithium manganese composite oxides represented by Formula $LiMn_{2-c3}M_{c3}O_2$ (where M is at least one selected from the group consisting of Co, Ni, Fe, Cr, Zn, and Ta, and $0.01 \leq c3 \leq 0.1$ is satisfied) or $Li_2Mn_3MO_8$ (here, M is at least one selected from the group consisting of Fe, Co, Ni, Cu and Zn); lithium nickel cobalt manganese (NCM) composite oxides, lithium nickel cobalt manganese aluminum (NCMA) composite oxides, and $LiMn_2O_4$ in which a part of Li in the formula is substituted with alkaline earth metal ions, and the like, but is not limited thereto.

When the active material layer is a negative electrode active material layer, as the active material, for example, a compound capable of reversible intercalation and deintercalation of lithium may be used. A specific example may include carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as $SiO_\beta$ ($0 < \beta < 2$), $SnO_2$, vanadium oxide, and lithium vanadium oxide; or a composite comprising the metallic compound and the carbonaceous materials such as a Si-C composite or a Sn-C composite, and the like, and any one or a mixture of two or more of the foregoing may be used.

A metal lithium thin film may be used as the negative electrode active material. As the carbon material, low crystalline carbon and high crystalline carbon, and the like may be used. As the low crystalline carbon, soft carbon and hard carbon are representative, and as the high crystalline carbon, high-temperature baked carbons such as amorphous, plate-like, scale-like, spherical or fibrous natural graphite or artificial graphite, Kish graphite, pyrolytic carbon, mesophase pitch based carbon fiber, mesocarbon microbeads, mesophase pitches, and petroleum and coal tar pitch derived cokes are representative.

In the composition for the active material layer, the active material may be included in a range of about 80 wt% to 99.5 wt% or in a range of 88 wt% to 99 wt% relative to the total weight of the composition, but the content is not limited thereto.

The composition for the active material layer or the active material layer may further comprise a binder. The binder serves to improve attachment between active materials and adhesion force between the active material layer and the current collector layer. An example of the binder for the active material is not particularly limited, and one or more may be selected from the group consisting of, for example, polyvinylidene fluoride (PVDF), polyvinyl alcohol, styrene butadiene rubber, polyethylene oxide, carboxyl methyl cellulose, cellulose acetate, cellulose acetate butylate, cellulose acetate propionate, cyanoethylpullulan, cyanoethyl polyvinyl alcohol, cyanoethyl cellulose, cyanoethyl sucrose, pullulan, polymethylmethacrylate, polybutylacrylate, polyacrylonitrile, polyvinylpyrrolidone, polyvinylacetate, polyethylene-co-vinyl acetate, polyarylate and a low molecular weight compound with a molecular weight of 10,000g/mol or less, and used.

Typically, polyvinylidene fluoride or styrene butadiene rubber, and the like may be used.

When the binder for the active material comprises polyvinylidene fluoride, the polyvinylidene fluoride may have a weight average molecular weight in a range of 400,000 g/mol to 1,500,000 g/mol, or 600,000 g/mol to 1,200,000 g/mol in terms of adhesion force improvement with the active material layer as described above and securing the desired viscosity. Here, the weight average molecular weight may be measured using gel permeation chromatography (GPC). In addition, the polyvinylidene fluoride may have a melting point of 150°C to 180°C, or 165°C to 175°C for solubility improvement. Here, the melting point may be measured using a differential scanning calorimeter (DSC).

The binder for the active material may be included in a range of 0.1 parts by weight to 10 parts by weight, or 0.5 parts by weight to 5 parts by weight relative to 100 parts by weight of the active material, but is not limited thereto.

The composition or active material for the active material layer may further comprise a conductive material. The conductive material is not particularly limited as long as it has conductivity without causing a chemical change in the relevant battery, and for example, graphite such as natural graphite or artificial graphite; carbon black, such as carbon black, acetylene black, Ketjen black, channel black, furnace black, lamp black, or thermal black; conductive fibers such as carbon fibers or metal fibers; conductive tubes such as carbon nanotubes (CNTs); metal powders such as fluorocarbon, aluminum, or nickel powder; conductive whiskers such as zinc oxide or potassium titanate; conductive metal oxides such as titanium oxide; conductive materials such as polyphenylene derivatives, and the like may be used.

The conductive material may be included in an amount of 0.1 parts by weight to 20 parts by weight, or 0.3 parts by weight to 10 parts by weight relative to 100 parts by weight of the active material, but is not limited thereto.

The composition for the active material layer may further comprise a dispersion solvent. Since most of the dispersion solvent is removed by drying during the electrode manufacturing process, it is not included in the active material layer or is included in a small amount. As the dispersion solvent, conventional types may be used, and for example, isopropyl alcohol, N-methylpyrrolidone (NMP) and/or acetone, and the like may be used.

In the electrode, the electrode active material layer and the insulating layer may form a portion overlapping each other, while being formed side by side along a direction perpendicular to the surface normal direction of the current collector layer.

That is, the insulating layer may be formed to be overlapped with the active material layer in at least some regions. By minimizing exposure of the current collector layer and preventing a short circuit phenomenon caused by contact between the positive electrode and the negative electrode, and the like through the formation of such an overlapping portion, it is possible to improve the quality and stability of the electrode and the battery including the same, and the like.

The insulating layer may be formed using a composition for an insulating layer.

Therefore, the insulating layer may comprise components included in the composition.

For example, the composition for an insulating layer or the insulating layer may comprise a binder. The binder for the insulating layer may be included in a range of about 30 wt% to 70 wt%, or about 40 wt% to 60 wt% relative to the total weight of the composition for the insulating layer, but is not limited thereto.

The binder for the insulating layer may be, for example, a component that imparts binding properties to the insulating layer, the current collector layer and/or the active material layer. The binder for the insulating layer is not particularly limited, but one or more may be used from the group consisting of, for example, polyvinylidene fluoride, polyvinyl alcohol, styrene butadiene rubber, styrene butadiene latex, polyethylene oxide, carboxyl methyl cellulose, cellulose acetate, cellulose acetate butylate, cellulose acetate propionate, cyanoethylpullulan, cyanoethyl polyvinylalcohol, cyanoethyl cellulose, cyanoethyl sucrose, pullulan, polymethylmethacrylate, polybutylacrylate, polyacrylonitrile, polyvinylpyrrolidone, polyvinylacetate, polyethylene-co-vinyl acetate, polyarylate and a low molecular weight compound with a molecular weight of 10,000g/mol or less. For example, as the binder applied to the insulating layer, styrene-butadiene rubber and/or styrene-butadiene latex, and the like may be used in terms of adhesion properties, chemical resistance, and electrochemical stability and in terms of efficiency in forming an insulating layer with a thickness relation to be described below.

When the binder for the insulating layer comprises styrene butadiene rubber and/or styrene butadiene latex, their glass transition temperature by differential scanning calorimetry may be -40°C or more, -37.5°C or more, -35°C or more, -32.5°C or more, or -30°C or more, and in another example, the glass transition temperature maybe -5°C or less, -7.5°C or less, or -10°C or less. The glass transition temperature may be measured using a differential scanning calorimeter (DSC).

As the binder for the insulating layer, the same compound as the binder for the active material layer may also be used. In this case, the binding force may be further improved in the overlapping region of the active material layer and the insulating layer, whereby product stability, adhesion force and sticking force, and processability may be improved.

In one example, the composition for the insulating layer or the insulating layer may further comprise a colorant. The colorant included in the insulating layer may be one or more selected from the group consisting of disperse dyes, pigments, and organic phosphors. The colorant may be included in the insulating layer in order to confirm the formation or alignment position of the insulating layer through a detection device.

The colorant may be included in an amount of 0.1 parts by weight to 10 parts by weight or 0.5 parts by weight to 5 parts by weight relative to 100 parts by weight of the binder for the insulating layer, but is not limited thereto.

The disperse dye is not specifically limited, and a well-known dye may be used. The disperse dye may be exemplified by benzene azo series (monoazo, disazo), heterocyclic azo series (thiazole azo, benzothiazole azo, pyridonazo, pyrazolone azo, thiophene azo, etc.), anthraquinone series and condensed series (quinophthalone, styryl, coumarin, etc.), and the like.

In one example, the disperse dye applied to the present application may be exemplified as follows.

Yellow dyes such as C.I. Disperse Yellow 3, 4, 5, 7, 9, 13, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 114, 116, 118, 119, 122, 124, 126, 135, 140, 141, 149, 160, 162, 163, 164, 165, 179, 180, 182, 183, 186, 192, 198, 199, 202, 204, 210, 211, 215, 216, 218, and 224; orange dyes such as C.I. Disperse Orange 1, 3, 5, 7, 11, 13, 17, 20, 21, 25, 29, 30, 31, 32, 33, 37, 38, 42, 43, 44, 45, 47, 48, 49, 50, 53, 54, 55, 56, 57, 58, 59, 61, 66, 71, 73, 76, 78, 80, 89, 90, 91, 93, 96, 97, 119, 127, 130, 139, and 142; red dyes such as C.I. Disperse Red 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 289, 298, 302, 303, 310, 311, 312, 320, 324, and 328; violet dyes such as C.I. Disperse Violet 1, 4, 8, 23, 26, 27, 28, 31, 33, 35, 36, 38, 40, 43, 46, 48, 50, 51, 52, 56, 57, 59, 61, 63, 69, and 77; green dyes such as C.I. Disperse Green 6:1, and 9; brown dyes such as C.I. Disperse Brown 1, 2, 4, 9, 13, and 19; blue dyes such as C.I. Disperse Blue 3, 7, 9, 14, 16, 19, 20, 26, 27, 35, 43, 44, 54, 55, 56, 58, 60, 62, 64, 71, 72, 73, 75, 79, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211 214, 224, 225, 257, 259, 267, 268, 270, 284, 285, 287, 288, 291, 293, 295, 297, 301, 315, 330, and 333; black dyes such as C.I. Disperse Black 1, 3, 10, and 24, and the like may be used.

The pigment is not specifically limited, and a well-known pigment may be used. The organic pigment may include azo pigments such as soluble azo pigments, insoluble azo pigments and condensed azo pigments, polycyclic pigments such as Quinacridone pigments, perylene pigments, pellinone pigments, isoindolinone pigments, isoindoline pigments, dioxazine pigments, thioindigo pigments, anthraquinone pigments, quinophthalone pigments, metal complex pigments, and diketopyrrolopyrrole pigments, phthalocyanine pigments, and the like. In addition, the inorganic pigment may include carbon black, metal oxides, metal hydroxides, metal sulfides, metal ferrocyanides, and metal chlorides, and the like, and the carbon black may include furnace black, lamp black, acetylene black, channel black, and the like.

The pigment usable in the present application may be exemplified as follows.

It may include red pigments such as C.I. Pigment Red 7, 9, 14, 41,48:1,48:2,48:3,48:4,81:1,81:2,81:3, 122, 123, 146, 149, 168, 177, 178, 179, 187, 200, 202, 208, 210, 215, 224, 254, 255, and 264; yellow pigments such as C.I. Pigment Yellow 1, 3, 5, 6, 14, 55, 60, 61, 62, 63, 65, 73, 74, 77, 81, 93, 97, 98, 104, 108, 110, 128, 138, 139, 147, 150, 151, 154, 155, 166, 167, 168, 170, 180, 188, 193, 194, and 213; orange pigments such as C.I. Pigment Orange 36, 38, and 43; blue pigments such as C.I. Pigment Blue 15,15:2,15:3,15:4,15:6, 16, 22, and 60; green pigments such as C.I. Pigment Green 7, 36, and 58; violet pigments such as C.I. Pigment Violet 19, 23, 32, and 50; and black pigments such as C.I. Pigment Black 7. Among these, C.I. Pigment Red 122, C.I. Pigment Yellow 74, 128, and 155, C.I. Pigment Blue 15:3,15:4, and 15:6, C.I. Pigment Green 7, and 36, C.I. Pigment Violet 19, C.I. Pigment Black 7, and the like may be used.

The organic phosphor may be, for example, an organic phosphor having a carboxyl group and/or a phosphate group.

As the oil-soluble dye, a benzimidazolone-based compound, an azo-based compound, a quinophthalone-based compound, a quinacridone-based compound, a phthalocyanine-based compound, and a DPP (diketo-pyrrolo-pyrrole)-based compound, a combination of two or more thereof, and the like may be used, and preferably, a benzimidazolone-based compound, an azo-based compound, a combination of two or more thereof, and the like may be used in terms of improving recognition.

The colorant may further comprise metal ions. Specifically, the colorant may include a disperse dye, a pigment and/or an organic phosphor in which a complex salt structure is formed with metal ions. The disperse dye, pigment and/or organic phosphor may increase solubility or dispersibility in a solvent, and improve light resistant stability and heat resistance by having a structure complexed with the metal ions.

The metal ion is not particularly limited as long as it is a metal ion capable of forming a complex salt structure, which may include, for example, copper, cobalt, chromium, nickel and/or iron ions, preferably chromium ions.

The composition for the insulating layer or the insulating layer may comprise a ceramic material (ceramic). In one example, the ceramic may be included together with the binder. In this case, the ceramic material may be included in a range of 50 parts by weight to 200 parts by weight, or 75 parts by weight to 150 parts by weight, or 85 parts by weight to 150 parts by weight, or 95 parts by weight to 150 parts by weight, relative to 100 parts by weight of the binder for the insulating layer.

By using the ceramic material, the insulating layer may secure excellent heat resistance. The ceramic material may include, for example, one or more selected from the group consisting of a metal oxide, a metalloid oxide, a metal fluoride, and a metal hydroxide. Specifically, it may include one or more selected from the group consisting of $AlO(OH)$, $Al_2O_3$, $SiO_2$, $TiO_2$, $SnO_2$, $CeO_2$, $MgO$, $NiO$, $CaO$, $ZnO$, $ZrO_2$, $Y_2O_3$, $SrTiO_3$, $BaTiO_3$ and $Mg(OH)_2$. In a suitable example, the ceramic material may be boehmite ($AlO(OH)$).

The composition for the insulating layer or the insulating layer may further comprise a dispersant for the ceramic material in order to ensure dispersibility of the ceramic material.

The ceramic material dispersant may be included, for example, in 0.01 parts by weight to 5 parts by weight, or 0.1 parts by weight to 1 part by weight relative to 100 parts by weight of the ceramic material, but is not limited thereto.

As the dispersant, for example, tannic acid may be used.

The composition for the insulating layer may further comprise a dispersion solvent. Since the solvent may be removed by drying or the like during the electrode manufacturing process, it may not exist in the insulating layer or may exist in a small amount, in the final electrode.

Here, the dispersion solvent is not particularly limited as long as it is used in the art, and for example, isopropyl alcohol, N-methylpyrrolidone (NMP) and/or acetone, and the like may be used.

The electrode of the present application may be manufactured by the following method.

For example, the electrode may be manufactured by a method comprising steps of: applying the composition for the electrode active material layer on the current collector; and applying the composition for the insulating layer on the current collector. At this time, there is no precedence in the application order of the composition for the electrode active material layer and the composition for the insulating layer, but the composition for the insulating layer is usually applied later.

The compositions are applied so that the above-described electrode structure may be formed, and thus the composition for the electrode active material layer and the composition for the insulating layer may be applied so that while the electrode active material layer and the insulating layer are formed in a direction perpendicular to the surface normal direction of the current collector, that is, side by side, the portion overlapping each other may be formed.

Therefore, for example, in the present application, the composition for the active material layer may be first applied on the current collector layer (10), and the composition for the insulating layer may be applied to have an overlapping region with at least a portion of the composition for the active material layer.

In general, when a composition for an active material layer is applied on a current collector layer, the end of the applied composition for an active material layer may be formed with an inclined surface called a sliding portion. For example, while the composition for the insulating layer is applied on at least a portion of the inclined surface, an overlapping region where the composition for the active material layer and the composition for the insulating layer contact may occur. The insulating layer (30) may be formed so that the compositions thus applied are overlapped with at least a portion of the inclined surface of the active material layer (i.e., while the overlapping region is formed), while being dried.

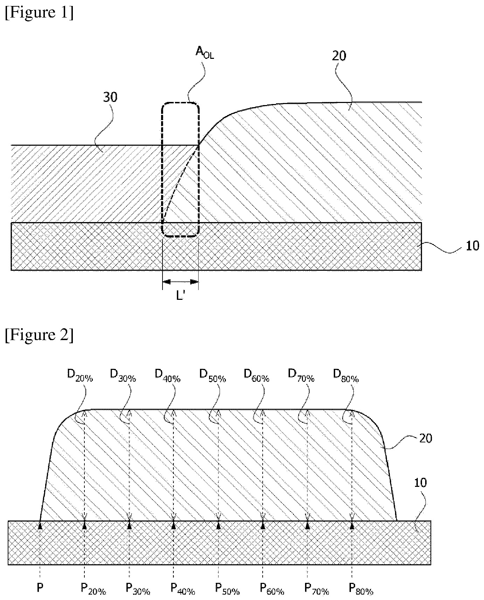

Figure 1 is an example of an electrode comprising an electrode active material layer (20) and an insulating layer (30) which are formed on a current collector layer (10), wherein it can be confirmed that the electrode active material layer (20) and the insulating layer (30) form each other an overlapping region ($A_{OL}$), and this region ($A_{OL}$) is formed on the inclined surface of the electrode active material layer (20).

In such a structure, when the insulating layer (30) is thicker than the active material layer (20), damage to the current collector layer (10) or the separator may occur during a rolling process or a manufacturing process of an electrode assembly. In addition, even if the insulating layer (30) is not thicker than the active material layer (20), the same problem as above may occur when the surface of the insulating layer (30) is at a position higher than the surface of the active material layer (20) in the overlapping portion ($A_{OL}$).

Accordingly, in the manufacturing method according to one example of the present application, a process of determining the maximum average thickness of the insulating layer may be performed, and in the manufacturing process, the coating thickness of the composition for an insulating layer may be controlled to be the same as the maximum average thickness or smaller than that.

In the present application, the maximum average thickness of the insulating layer means the allowable maximum average thickness of the insulating layer in which the fat edge portion may not occur in the electrode.

Therefore, in the method of manufacturing an electrode according to one example of the present application, the coating thickness of the composition for an insulating layer may satisfy Equation 4 below.

[Equation 4]

$$T_L \leq T_{max}$$

In Equation 4, $T_{max}$ is the maximum average thickness of the insulating layer, and $T_L$ is the coating thickness of the composition for the insulating layer.

By controlling the coating thickness of the composition for the insulating layer to satisfy this relationship, it is possible to effectively form the electrode in which the fat edge portion does not occur.

Since the electrode design model is frequently changed due to various demands, the loading amount of the composition for the active material layer for forming the active material layer (20) is not fixed, and accordingly, the prediction of the upper limit of the thickness of the insulating layer (30) is required.

By considering the maximum average thickness of the insulating layer (30), the method of manufacturing an electrode of the present application can prevent short circuits to secure stability, prevent damage to the battery, and flexibly cope with changes in the electrode design model.

Accordingly, the method of manufacturing an electrode according to one example of the present application may comprise a step of determining a maximum average thickness of the insulating layer.

In the present application, the term average thickness may mean an arithmetic mean of thicknesses measured at portions which are 20% (P20%), 30% (P30%), 40% (P40%), 50% (P50%), 60% (P60%), 70% (P70%), and 80% (P80%) of the entire horizontal length from any one point of both ends based on the horizontal direction when an arbitrary layer (100) is viewed from the side. Referring to Figure 2, an appearance of the layer (100) viewed from the side is shown. Referring to Figure 2, if there is an arbitrary layer (100) having an overall horizontal length (L) of 500 mm, a value obtained by selecting any one point (P) from both ends when the layer (100) is viewed from the side, and measuring the thicknesses of 100 mm, 150 mm, 200 mm, 250 mm, 300 mm, 350 mm and 400 mm points from the point (P), respectively (D20%, D30%, D40%, D50%, D60%, D70% and D80%) to average them can be called the average thickness. The thicknesses of the respective points may be measured using a thickness tester generally used in the art. In addition, unless otherwise specified, in the present application, the term thickness may mean the average thickness.

The meaning of the term maximum average thickness in the present application is the same as described above.

In the present application, the maximum average thickness of the insulating layer (30) may be determined in consideration of the average thickness of the electrode active material layer and/or the maximum overlapping region.

Here, the average thickness of the electrode active material layer may be the thickness of the electrode active material layer in the actual electrode or the thickness of the electrode active material layer intended by a designer before manufacturing the electrode. In the latter case, the thickness of the electrode active material layer may be referred to as a predetermined thickness of the electrode active material layer.

In this specification, the term length of the overlapping region is the total length when the overlapping region of the electrode active material layer and the insulating layer is viewed from the side. In Figure 1, the total length of the overlapping region ($A_{OL}$) of the electrode active material layer (20) and the insulating layer (30) when viewed from the side is indicated by L'.

In addition, the term the maximum length of the overlapping region means the allowable maximum length of the overlapping region in which the fat edge portion may not occur in the electrode.

In the present application, the average thickness of the electrode active material layer is not particularly limited, but may be usually 50 $\mu$m or more, 52.5 $\mu$m or more, 55 $\mu$m or more, 57.5 $\mu$m or more, 60 $\mu$m or more, 62.5 $\mu$m or more, 65 $\mu$m or more, 67.5 $\mu$m or more, 70 $\mu$m or more, 72.5 $\mu$m or more, 75 $\mu$m or more, 77.5 $\mu$m or more, or 80 $\mu$m or more. In addition, there is no particular limitation on the upper limit of the average thickness, but the average thickness may be usually 300 $\mu$m or less, 275 $\mu$m or less, 250 $\mu$m or less, 225 $\mu$m or less, or 200 $\mu$m or less. The average thickness of the electrode active material layer may be within a range formed by appropriately selecting the above-described upper and lower limits.

In addition, in the electrode of the present application, the length of the overlapping region or the maximum length of the overlapping region is not particularly limited, but may be usually 0.001 mm or more, 0.005 mm or more, 0.01 mm or more, 0.05 mm or more, 0.1 mm or more, 0.2 mm or more, 0.3 mm or more, 0.4 mm or more, 0.5 mm or more, 0.6 mm or more, 0.7 mm or more, 0.8 mm or more, 0.9 mm or more, or 1 mm or more. The length of the overlapping region or the maximum length of the overlapping region may also be 2 mm or less, 1.9 mm or less, 1.8 mm or less, 1.7 mm or less, 1.6 mm or less, 1.5 mm or less, 1.4 mm or less, 1.3 mm or less or 1.2 mm or less, 1 mm or less or 0.5 mm or less or so. The length of the overlapping region or the maximum length of the overlapping region may be within a range formed by appropriately selecting the upper and lower limits. In addition, when the length of the overlapping region or the maximum length of the overlapping region is within the above range, it is possible to secure appropriate insulation, while maximizing the capacity of the battery, to prevent a short circuit phenomenon between the positive electrode and the negative electrode, and the like. Here, the length of the overlapping region, that is, the length of the actually formed overlapping region, may be equal to or smaller than the maximum length of the overlapping region.

In addition, the method of manufacturing an electrode according to one example of the present application may be suitable when the predetermined average thickness of the active material layer and the predetermined maximum length of the overlapping region satisfy the above ranges.

In the method of manufacturing an electrode according to one example of the present application, the step of determining the maximum average thickness of the insulating layer (30) may comprise a step of obtaining thickness profile data which is data of a ratio ($T_{ax}/T_a$) of the thickness ($T_{ax}$) of the active material layer (20) according to the distance to the direction of the active material layer (20) from the insulating layer (30) in the overlapping region to the average thickness ($T_a$) of the active material layer (20). The maximum average thickness of the insulating layer (20) may be determined, in the thickness profile data corresponding to the predetermined maximum length of the overlapping region, by the thickness ($T_{ax}$) of the electrode active material layer (20) according to the distance to the direction of the active material layer from the insulating layer (30) in the overlapping region.

The thickness profile data may be expressed in the form of an exponential function when the horizontal axis is set to the distance to the direction of the active material layer (20) from the insulating layer (30) and the vertical axis is set to the ratio ($T_{ax}/T_a$).

The thickness profile data may be statistically significant data. Therefore, in the data, the $R^2$ value of the trend line (or trend curve) in the form of the function is 0.9 or more, 0.91 or more, 0.92 or more, 0.93 or more, 0.94 or more, 0.95 or more, 0.96 or more, 0.97 or more, or 0.98 or more.

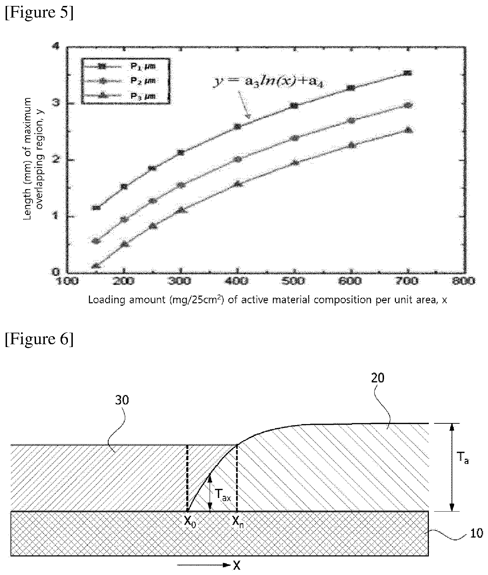

Figure 6 is a diagram that with respect to one example of an electrode manufactured by the method of manufacturing an electrode according to the present application, the overlapping region of the active material layer (20) and the insulating layer (30) is enlarged and shown. According to Figure 6, the direction of the active material layer (20) from the insulating layer (30) in the overlapping region is indicated by +X, where the starting point of the overlapping region is indicated by $X_0$ and the ending point is indicated by $X_n$. The thickness of the active material layer (20) from $X_0$ to $X_n$ is the thickness corresponding to the above-described inclined surface, which is indicated by $T_{ax}$, and the average thickness of the active material layer (20) is indicated by $T_a$.

The step of obtaining the thickness profile data, which is the data of the ratio ($T_{ax}/T_a$) of the thickness ($T_{ax}$) of the active material layer (20) according to the direction of the active material layer (20) from the insulating layer (30) in the overlapping region to the predetermined average thickness ($T_a$) of the active material layer (20) may obtain data in the form of the function by measuring the ratio ($T_{ax}/T_a$) of $T_{ax}$ and $T_a$ from $X_0$ to $X_n$ and representing the measurement results as a graph, as shown in Figure 6.

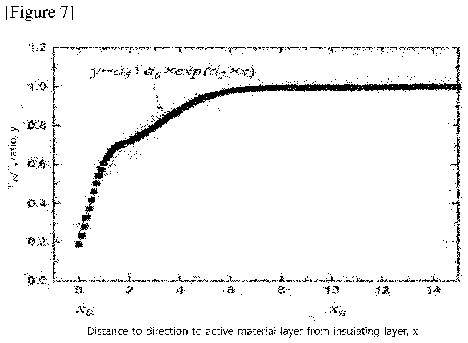

Referring to Figure 7, an example of a graph showing the results obtained by measuring the ratio ($T_{ax}/T_a$) of $T_{ax}$ and $T_a$ along the direction from the insulating layer (30) to the active material layer (20) (that is, the direction from $X_0$ to $X_n$ in Figure 6) can be confirmed.

In one example of the present application, the $T_{ax}$ value obtained by deriving a $T_{ax}/T_a$ value based on the graph as shown in Figure 7 and substituting the predetermined average thickness ($T_a$) of the active material layer into the derived $T_{ax}/T_a$ value may be determined as the maximum average thickness ($T_{max}$ in Equation 4) of the insulating layer (20).

For example, referring to Figure 7, when y is the $T_{ax}/T_a$, and x is the distance from $X_0$ (=0 mm) to $X_n$ (=10 mm), a function of $y=a_5+a_6\times exp(a_7\times x)$ ($a_5$, $a_6$ and $a_7$ are constants) may be obtained as a trend curve formed through several data (data of the $T_{ax}/T_a$ value corresponding to one point between $X_0$ to $X_n$). In order to obtain the maximum average thickness, Equation (1-y) obtained by subtracting the result of the above equation from 1 may be used. For example, if the maximum length of the overlapping region is 1 mm, the $T_{ax}/T_a$ value of the above equation is $a_5+a_6\times exp(a_7\times 1mm)$, where a value obtained by multiplying the result (1-$a_5+a_6\times exp(a_7\times 1mm)$) of subtracting the above from 1 by the average thickness ($T_a$) of the active material layer (20) may be determined as the maximum average thickness ($T_{max}$ in Equation 4) of the insulating layer (30).

Therefore, in one example, $T_{max}$ of Equation 4 above may be determined according to Equation 5 below.

[Equation 5]

$$T_{max}=T_a\times\{a\times exp(b\times L)-c\}$$

In Equation 5, Ta is the average thickness of the active material layer, and L is the maximum length of the overlapping region.

In Equation 5, $T_a$ is the average thickness of the active material layer, and L is the maximum length of the overlapping region.

In Equation 5, the unit of $T_a$ is $\mu$m, and the unit of L is mm.

In Formula 5, a, b, and c are arbitrary constants. There is no particular limitation on the respective ranges of a, b and c.

In one example, the a may be 0.55 or more, 0.6 or more, 0.7 or more, or 0.75 or more. In addition, the a may be about 0.95 or less, 0.9 or less, 0.85 or less, 0.8 or less, or 0.76 or less. The range of the a may be within a range in which any one of the above-described lower limits and any one of the above-described upper limits are combined.

In one example, the b may be -0.8 or more, -0.75 or more, -0.7 or more, -0.65 or more, -0.6 or more, -0.55 or more, or -0.5 or more. The b may be -0.2 or less, -0.25 or less, - 0.3 or less, -0.35 or less, -0.4 or less, -0.45 or less, or -0.49 or less. The range of the b may be within a range in which any one of the above-described lower limits and any one of the above-described upper limits are combined.

In one example, the c may be 0.001 or more, 0.0015 or more, or 0.002 or more. The c may be 0.004 or less, 0.0035 or less, 0.003 or less, 0.0025 or less, or 0.0022 or less. The range of the c may be within a range in which any one of the above-described lower limits and any one of the above-described upper limits are combined.

By applying the ranges of a, b, and c to determine $T_{max}$ of Equation 4 according to Equation 5 above, it is possible to manufacture an electrode suitable for the purpose of the present application more efficiently.

In the method of manufacturing an electrode according to one example of the present application, the step of determining the maximum average thickness of the insulating layer may also comprise steps of: obtaining loading data including thickness data of the active material layer according to the loading amount of the composition for the active material layer per unit area; and obtaining maximum length data of the overlapping region according to the loading amount of the composition for the active material layer per unit area for each specific thickness of the insulating layer.

The step of determining the maximum average thickness of the insulating layer may also be performed by deriving from the loading data a loading amount that the active material layer can have a predetermined average thickness of the active material layer, and applying the derived loading amount of the composition for the active material layer and the predetermined maximum length of the overlapping region to the maximum length data of the overlapping region according to the loading amount of the composition for the active material layer per unit area for each specific thickness of the insulation layer to derive the maximum average thickness of the insulation layer.

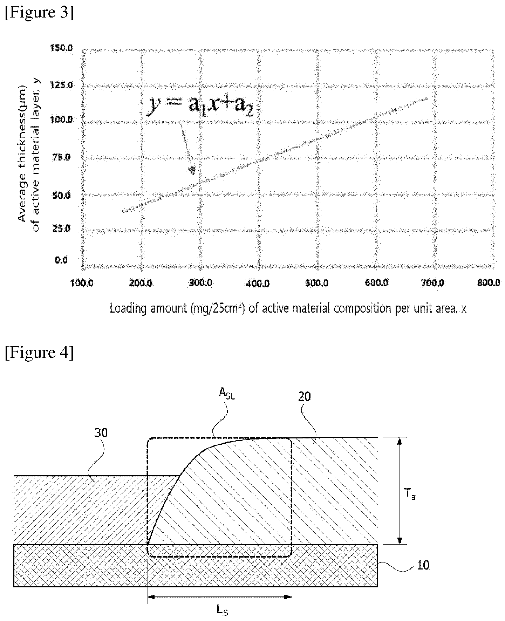

For the step of obtaining the loading data including the thickness data of the active material layer according to the loading amount of the composition for the active material layer per unit area, reference may be made to the description of the step of applying the composition for the active material layer below. Based on the loading data, it is possible to derive a loading amount in which the active material layer can have the predetermined average thickness of the active material layer. For example, with reference to Figure 3, the loading amount of the composition for the active material layer corresponding to the predetermined average thickness of the active material layer (20) may be calculated by inverse calculation through the above function.

In the maximum length data of the overlapping region according to the loading amount of the composition for the active material layer per unit area for each specific thickness of the insulating layer, when the insulating layer has been formed after applying the insulating layer composition, the specific thickness of the insulating layer means the desired thickness of the formed insulating layer.

Here, the maximum length data of the overlapping region according to the loading amount of the composition for the active material layer per unit area for each specific thickness of the insulating layer may be statistically significant. In addition, when the horizontal axis has been set to the loading amount per unit area of the composition for the active material layer and the vertical axis has been set to the maximum length of the overlapping region, the maximum length data of the overlapping region according to the loading amount of the composition for the active material layer per unit area for each specific thickness of the insulating layer may be expressed in the form of a log function.

That is, in the method of manufacturing an electrode according to one example of the present application, the maximum average thickness of the insulating layer may be determined by considering the insulating layer having a specific thickness and the predetermined maximum length of the overlapping region based on the maximum length data of the overlapping region according to the loading amount of the composition for the active material layer per unit area for each specific thickness of the insulating layer.

Here, the length of the overlapping region may mean the horizontal length of the region overlapped with the insulating layer (30) in the inclined surface portion at the end of the active material layer (20). In addition, the inclined surface portion means a portion that is inclined while being smaller than the average thickness at the end portion of the active material layer (20). Referring to Figure 4, it can be seen that there is a portion ($A_{SL}$) which is inclined while being smaller than the average thickness ($T_a$) at the end portion of the active material layer (20). In addition, $L_s$, which is the length of the inclined portion ($A_{SL}$) in the horizontal direction including the region overlapped with the insulating layer (30) in the inclined surface portion ($A_{SL}$), may be the maximum length of the overlapping region.

That is, in this specification, the maximum length of the overlapping region may mean the length of the portion ($A_{SL}$) thinner than the average thickness ($T_a$) of the electrode active material layer at the end portion of the electrode active material layer (20).

At least a portion of the insulating layer (30) overlaps in the inclined surface portion ($A_{SL}$) of the active material layer (20), where since the insulating layer (30) must be positioned equal to or lower than the average thickness ($T_a$) of the active material layer (20), the region capable of maximally overlapping may be eventually the inclined surface portion ($A_{SL}$) of Figure 4, and Ls, which is a length in the horizontal direction thereof, may be the maximum length of the overlapping region.

Referring to Figure 5, an example of the maximum length data of the overlapping region according to the loading amount of the composition for the active material layer per unit area for each specific thickness of the insulating layer can be confirmed. In the maximum length data of the overlapping region, data in the form of a function may be obtained by measuring the length of the inclined surface at the end of the active material layer (20) according to the loading amount per unit area of the composition for the active material layer for each thickness of the insulating layer, and representing the measurement result as a graph.

Referring to Figure 5, when y is the maximum length of the overlapping region and x is the loading amount of the composition for the active material layer per unit area (in this case, the unit area is 25 cm$^2$), a function of $y=a_3\ln(x)+a_4$ ($a_3$ and $a_4$ are constants) can be obtained by a trend curve formed through several data in the case of obtaining an insulating layer (30) having an average thickness of P1 $\mu$m, and the above function can be obtained in the same manner as above even in the case where the thickness of the insulating layer (30) is P2 $\mu$m or P3 $\mu$m, and the like (not limited thereto, and may be more added) instead of P1 $\mu$m (P1, P2, and P3 and the like are different constants, respectively).

In the data having a plurality of trend curves obtained from several data, the trend curve passing through the point where a constant function (i.e., a function corresponding to x=a loading amount) of a point corresponding to the derived loading amount of the composition for the active material layer and a constant function (i.e., a function corresponding to y=the predetermined maximum length of the overlapping region) of a point corresponding to the predetermined maximum length of the overlapping region meet each other is derived, where the average thickness of the insulating layer (30) in the trend curve may be determined as the maximum average thickness of the insulating layer (30) according to one example of the present application.

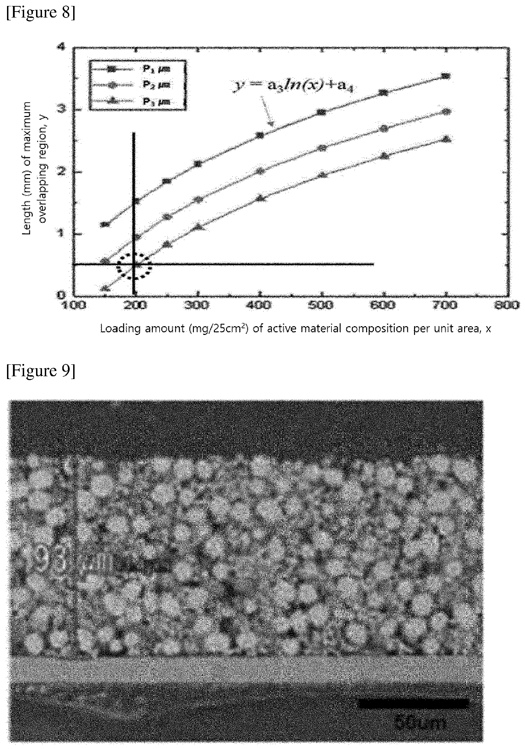

For example, as explained with reference to Figure 8, when the derived loading amount of the composition for the active material layer is about 200 mg/25cm$^2$ and the predetermined maximum length of the overlapping region is about 0.5 mm, the constant functions of x=200 and y=0.5 in the data corresponding to Figure 5 are depicted, respectively, whereby the point (see dashed circle) where they intersect can be derived. Here, the trend curve passing through the point is when the average thickness of the insulating layer is P3 $\mu$m, where the P3 $\mu$m may be determined as the maximum average thickness of the insulating layer (30). Figure 8 shows one example of determining the maximum average thickness of the insulating layer, which exemplifies a case where the derived loading amount of the composition for thew active material layer is about 200 mg/25cm$^2$ and the predetermined maximum length of the overlapping region is about 0.5 mm.

In the method for manufacturing an electrode according to one example of the present application, the step of applying the composition for the active material layer further comprises a step of obtaining loading data including the thickness data of the active material layer (20) according to the loading amount of the composition for the active material layer per unit area, which may be performed in a manner of applying the composition for the active material layer by a loading amount that in the loading data, the active material layer (20) can have the predetermined average thickness of the active material layer (20).

Here, the thickness data of the active material layer (20) according to the loading amount of the composition for the active material layer per unit area may be statistically significant. In addition, the thickness data of the active material layer (20) according to the loading amount of the composition for the active material layer per unit area may be expressed in the form of a linear function.

Referring to Figure 3, an example of the thickness data of the active material layer (20) according to the loading amount of the composition for the active material layer per unit area can be confirmed. In the thickness data of the active material layer (20), data in the form of a function may be obtained by measuring a plurality of average thicknesses of the active material layer (20) formed according to the loading amount per unit area of the composition for the active material layer, and representing the measurement result as a graph. According to Figure 3, when y is the average thickness of the active material layer and x is the loading amount of the composition for the active material layer per unit area (in this case, the unit area is 25 cm$^2$), a function of $y=a_1x+a_2$ ($a_1$ and $a_2$ are constants) may be obtained as the trend line formed through several data, and the loading amount of the composition for the active material layer corresponding to the predetermined average thickness of the active material layer (20) may be calculated by inverse calculation through the above function.

That is, in the method of manufacturing an electrode according to one example of the present application, the loading amount of the composition for the active material layer can be specified in order to achieve the predetermined average thickness of the active material layer (20) based on the thickness data of the active material layer (20) according to the loading amount of the composition for the active material layer per unit area.

The method of manufacturing an electrode according to one example of the present application can easily respond to changes in the thickness of the active material layer and/or the length of the overlapping region required by changing the electrode design model through the above method.

In the method of manufacturing an electrode according to one example of the present application, the method of applying the composition for the active material layer and the composition for the insulating layer on the current collector layer (10) is not particularly limited as long as it is generally used in the art, where one of slot die coating, slide coating and curtain coating may each independently be used.

The method of manufacturing an electrode according to an example of the present application may comprise a step of drying the composition for the active material layer and the composition for the insulating layer applied on the current collector layer (10) to form the active material layer (20) and the insulating layer (30). The drying method is not particularly limited as long as it is generally used in the art, where one of a hot air method, an infrared irradiation method and an induction heating method may be used. The drying temperature is not particularly limited as long as the composition for the active material layer and the composition for the insulating layer can be sufficiently dried, but may be 50°C to 200°C, and the drying time may be about 1 minute to 10 minutes.

In the method of manufacturing an electrode according to one example of the present application, the electrode may be manufactured by performing a rolling process after drying. Through the rolling process, the capacity density of the active material may be increased, and the adhesion force between the current collector layer (10) and the active material layer (20), the current collector layer (10) and the insulating layer (30), and the active material layer (20) and the insulating layer (30) may be increased. In addition, the rolling method used in the rolling process is not particularly limited as long as it is generally used in the art, which may be a process of compressing the entire collector layer (10), on which the dried active material layer (20) and insulating layer (30) are formed, with a rolling member, where a rolling roller or a rolling jig may be used as the rolling member.

The present application also relates to an electrode.

In one example, the electrode of the present application may be one manufactured by the above-described manufacturing method.

In one example, the electrode may comprise a current collector layer; an electrode active material layer formed on the current collector layer; and an insulating layer formed on the current collector layer.

As described above, in the electrode, the electrode active material layer and the insulating layer may form a portion overlapping each other, while being formed side by side along a direction perpendicular to the surface normal direction of the current collector layer.

Here, the insulating layer may satisfy the relation of Equation 1 below.

[Equation 1]

$$T_L \leq T_S \times \{a \times exp(b \times L) - c\}$$

In Equation 1, $T_L$ is the thickness of the insulating layer, Ts is the thickness of the active material layer, and L is the length of the overlapping portion.

In Equation 1, the unit of $T_L$ and Ts is $\mu$m, and the unit of L is mm.

The thickness of the insulating layer may be the above-mentioned average thickness, and the thickness of the active material layer may also be the average thickness of the active material layer.

In addition, the L may be the real length (e.g., L' in Figure 1) of the overlapping portion, or may be the maximum length of the overlapping region as described above, that is, the allowable maximum length of the overlapping region in which the fat edge portion may not occur in the electrode. Here, the maximum length of the overlapping region may mean the length ($L_s$ in Figure 4) of the portion ($A_{SL}$) thinner than the average thickness ($T_a$) of the electrode active material layer at the end portion of the electrode active material layer (20), as described above.

The relation of Equation 1 above is a thickness relation indicated by the insulating layer formed by controlling the coating thickness of the composition for the insulating layer according to the contents of Equation 5 as described above, which has been confirmed experimentally.

In Formula 1, a, b, and c are arbitrary constants. There is no particular limitation on the respective ranges of a, b and c.

In one example, the a may be 0.55 or more, 0.6 or more, 0.7 or more, or 0.75 or more. In addition, the a may be about 0.95 or less, 0.9 or less, 0.85 or less, 0.8 or less, or 0.76 or less. The range of the a may be within a range in which any one of the above-described lower limits and any one of the above-described upper limits are combined.

In one example, the b may be -0.8 or more, -0.75 or more, -0.7 or more, -0.65 or more, -0.6 or more, -0.55 or more, or -0.5 or more. The b may be -0.2 or less, -0.25 or less, - 0.3 or less, -0.35 or less, -0.4 or less, -0.45 or less, or -0.49 or less. The range of the b may be within a range in which any one of the above-described lower limits and any one of the above-described upper limits are combined.

In one example, the c may be 0.001 or more, 0.0015 or more, or 0.002 or more. The c may be 0.004 or less, 0.0035 or less, 0.003 or less, 0.0025 or less, or 0.0022 or less. The range of the c may be within a range in which any one of the above-described lower limits and any one of the above-described upper limits are combined.

By satisfying the relation of Equation 1, it is possible to form an insulating layer or an electrode in which excellent insulation is ensured while the fat edge portion does not exist.

The electrode may further satisfy Equation 2 below.

[Equation 2]

$$0.1 \times T_S \leq T_L$$

In Equation 2, $T_L$ and Ts are the same as $T_L$ and Ts in Equation 1, respectively.

In Equation 2, in another example, $T_L$ may be $0.15 \times T_S$ or more, or $0.2 \times T_S$ or more.

By satisfying the relation of Equation 2, the insulation by the insulating layer can be stably secured, the phenomenon that the thickness deviation between the insulating layer and the active material layer becomes excessively large can be prevented, and the phenomenon that the current collector layer is exposed at the boundary between the insulating layer and the active material layer can be effectively prevented.

Meanwhile, the electrode may further satisfy Equation 3 below.

[Equation 3]

$$T_S = d \times L_D + e$$

In Equation 3, Ts is the same as Ts of Equation 1, $L_D$ is the loading amount (unit: mg/25cm$^2$) of the active material layer, d is a number within a range of 0.1 to 0.2, and e is a number within a range of 10 to 16.

Equation 3 is the relation between the loading amount of the active material layer (or the composition for the active material layer) and the thickness of the active material layer, which is experimentally derived from the relational expression shown in Figure 3.

In Equation 3, in another example, d may be 0.12 or more, or 0.14 or more, or may also be about 0.18 or less, or 0.16 or less or so.

In Equation 3, in another example, e may be 11 or more, or 12 or more, or may also be 15 or less, 14 or less, or 13 or less or so.

As described above, the average thickness of the electrode active material layer in Equations 1 to 3 is not particularly limited, but may be usually 50 $\mu$m or more, 52.5 $\mu$m or more, 55 $\mu$m or more, 57.5 $\mu$m or more, 60 $\mu$m or more, 62.5 $\mu$m or more, 65 $\mu$m or more, 67.5 $\mu$m or more, 70 $\mu$m or more, 72.5 $\mu$m or more, 75 $\mu$m or more, 77.5 $\mu$m or more, or 80 $\mu$m or more. In addition, there is no particular limitation on the upper limit of the average thickness, but the average thickness may be usually 300 μm or less, 275 μm or less, 250 μm or less, 225 μm or less, or 200 μm or less. The average thickness of the electrode active material layer may be within a range formed by appropriately selecting the above-described upper and lower limits.

The length L of the overlapping portion in Equation 1 above may be 0.001 mm or more, 0.005 mm or more, 0.01 mm or more, 0.05 mm or more, 0.1 mm or more, 0.2 mm or more, 0.3 mm or more, 0.4 mm or more, 0.5 mm or more, 0.6 mm or more, 0.7 mm or more, 0.8 mm or more, 0.9 mm or more, or 1 mm or more, and may also be 2 mm or less, 1.9 mm or less, 1.8 mm or less, 1.7 mm or less, 1.6 mm or less, 1.5 mm or less, 1.4 mm or less, 1.3 mm or less or 1.2 mm or less, 1 mm or less, or 0.5 mm or less or so. The length range may be within a range formed by appropriately selecting the upper and lower limits.

The length L may be the length of the real overlapping region in the electrode, or the maximum length of the overlapping region as described above.

By setting the length to be greater than or equal to the lower limit, it is possible to prevent that the current collector layer is exposed at the overlapping portion of the insulating layer and the active material layer, or the thickness deviation between the insulating layer and the active material layer is excessively large, whereby the efficiency in the rolling process is lowered, and it is possible to secure the appropriate insulation. In addition, by making the length below the upper limit, it is possible to effectively prevent the occurrence of the fat edge portion while maximizing the battery capacity.

Specific materials of the current collector layer, the insulating layer, and the active material layer are the same as described in the sections of the manufacturing method, respectively.

The present application may also provide an electrode assembly or a secondary battery comprising the electrode.

As well-known, the electrode assembly comprises a negative electrode; a positive electrode; and a separator, which has a structure in which the negative electrode and the positive electrode are laminated with the separator interposed therebetween, wherein the electrode of the present application may be used as either the negative electrode or the positive electrode.

The secondary battery may be a lithium-ion battery. In addition, the secondary battery comprises a positive electrode, a negative electrode positioned to face the positive electrode, a separator interposed between the positive electrode and the negative electrode, and an electrolyte. At this time, the secondary battery may optionally further comprise a battery container for accommodating the electrode assembly of the positive electrode, the negative electrode, and the separator, and a sealing member for sealing the battery container.

The separator separates the negative electrode and the positive electrode and provides moving passages for lithium ions, where any separator commonly used in the art may be used without particular limitation, and in particular, it is preferable that it has excellent electrolyte moisture content capability while having low resistance to ion movement of the electrolyte. Specifically, a porous polymer film, for example, a porous polymer film made of a polyolefin-based polymer such as an ethylene polymer, a propylene polymer, an ethylene/butene copolymer, an ethylene/hexene copolymer, and an ethylene/methacrylate copolymer, or a laminate structure of two or more layers thereof may be used. In addition, a conventional porous nonwoven fabric, for example, a nonwoven fabric made of high-melting point glass fiber, polyethylene terephthalate fiber, or the like may also be used. Furthermore, in order to secure heat resistance or mechanical strength, a coated separator containing a ceramic component or a polymer material may also be used, which may optionally be used in a single-layer or multi-layer structure.

As the electrolyte, an organic liquid electrolyte, an inorganic liquid electrolyte, a gel-type polymer electrolyte, a molten-type inorganic electrolyte, and the like generally used in the art may be used, but is not limited thereto. Specifically, the electrolyte may comprise an organic solvent and a lithium salt.

The organic solvent may be used without particular limitation as long as it can serve as a medium through which ions involved in the electrochemical reaction of the battery can move. Specifically, as the organic solvent, ester-based solvents such as methyl acetate, ethyl acetate, γ-butyrolactone, or ε-caprolactone; ether-based solvents such as dibutyl ether or tetrahydrofuran; ketone-based solvents such as cyclohexanone; aromatic hydrocarbon-based solvents such as benzene or fluorobenzene; carbonate-based solvents such as dimethylcarbonate (DMC), diethylcarbonate (DEC), methylethylcarbonate (MEC), ethylmethylcarbonate (EMC), ethylene carbonate (EC), or propylene carbonate (PC); alcohol-based solvents such as ethyl alcohol or isopropyl alcohol; nitriles such as R-CN (R is a linear, branched, or cyclic hydrocarbon group with 2 to 20 carbon atoms, which may contain a double bond aromatic ring or an ether bond); amides such as dimethylformamide; dioxolanes such as 1,3-dioxolane; or sulfolanes may be used. Among these, a carbonate-based solvent is preferable, and a mixture of a cyclic carbonate (for example, ethylene carbonate or propylene carbonate, etc.) having high ionic conductivity and high dielectric constant capable of increasing the charging/discharging performance of the battery, and a low-viscosity linear carbonate-based compound (for example, ethyl methyl carbonate, dimethyl carbonate or diethyl carbonate, etc.) is more preferable. In this case, when the cyclic carbonate and the chain carbonate are mixed in a volume ratio of about 1:1 to about 1:9, and used, the electrolyte may exhibit excellent performance.

The lithium salt may be used without particular limitation as long as it is a compound capable of providing lithium ions used in a lithium secondary battery. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC4F_9SO_3$, $LiN(C_2F_5SO_3)_2$, $LiN(C2F5SO2)_2$, $LiN(CF3SO_2)_2$. LiCl, LiI, or $LiB(C_2O_4)_2$, and the like may be used. The concentration of the lithium salt is preferably used within a range of 0.1 to 2.0M. When the concentration of the lithium salt is included in the above range, the electrolyte has appropriate conductivity and viscosity, so that it is possible to exhibit excellent electrolyte performance, and lithium ions may move effectively.

In addition to the electrolyte components, the electrolyte may also further comprise, for example, one or more additives of haloalkylene carbonate-based compounds such as difluoroethylene carbonate, pyridine, triethyl phosphite, triethanolamine, cyclic ether, ethylene diamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol or aluminum trichloride, and the like. At this time, the additive may be included in an amount of 0.1 to 5 wt% relative to the total weight of the electrolyte.

In addition, the secondary battery may be applied to a portable device such as a mobile phone, a notebook computer, a digital camera, and an electric vehicle field such as a hybrid electric vehicle (HEV).

**Advantageous Effects**

The present application can provide an electrode, a method of manufacturing an electrode, and a use of the electrode. The present application can provide an electrode without forming the pet edge portion while an insulating layer formed by overlapping with the active material layer in the current collector layer of the electrode effectively secures the insulation required for the electrode. In addition, even when the electrode design model is changed, the present application can provide a manufacturing method capable of manufacturing the above-described electrode by flexibly responding to the relevant change.

In addition, the present application can provide a use of the electrode.

**Description of Drawings**

Figure 1 is a side view of an electrode according to one example of the present application.

Figure 2 is a schematic diagram for explaining the average thickness used in the present application.

Figure 3 is an example of thickness data according to a loading amount of a composition for an active material layer.

Figure 4 is a diagram for explaining a maximum length of an overlapping region.

Figure 5 is an example of maximum length data of an overlapping region according to a loading amount of a composition for an active material layer per unit area for each thickness of an insulating layer.

Figure 6 is a side view of an electrode according to one example of the present application.

Figure 7 is an example of the result of measuring the ratio ($T_{ax}/T_a$) of $T_{ax}$ and $T_a$ according to the distance to the direction of the active material layer from the insulating layer.

Figure 8 is a graph for an example of determining a maximum average thickness of an insulating layer.

Figure 9 is an SEM (scanning electron microscope) image of the electrode of Example 1.

Figure 10 is an SEM (scanning electron microscope) image of the electrode of Comparative Example 1.

**Best Mode**

Hereinafter, the contents of the present application will be described in detail through Examples and Comparative Examples, but the scope of the present application is not limited to the contents presented below.

**Preparation Example 1. Composition for electrode active material layer**

A lithium nickel cobalt manganese aluminum (NCMA) composite oxide (NCMA), a binder (PVDF, poly(vinylidene fluoride)) (KF9700, manufactured by Kureha, weight average molecular weight (Mw): $8.8 \times 10^5$ g/mol) and a conductive material (carbon nanotubes, CNT) were mixed in a weight ratio of 97:1.5:1.5 (NCMA: PVDF: CNT), and dispersed in N-methyl pyrrolidone (NMP) so that the solid content was about 70 wt%, thereby preparing a composition for a positive electrode active material layer (slurry).

**Preparation Example 2. Composition for insulating layer**

SBR (styrene butadiene rubber) (BM-L302, ZEON) as a binder (B1), boehmite (AlO(OH), product name: AOH60) as a ceramic material (B2), tannic acid as a dispersant (B3), and Yellow 081 (manufacturer: BASF) as an organic dye (B4) were mixed in a weight ratio of 50:49:0.1:0.9 (B1: B2: B3: B4), and added to N-methylpyrrolidone (NMP) so that the solid content was about 15 wt%, thereby preparing a composition for an insulating layer.

## Test Example 1. Thickness data of active material layer according to loading amount

The composition for the positive electrode active material layer was applied to one side of an aluminum current collector layer having an area of 25 cm$^2$ in a loading amount within a range of about 100 mg to 700 mg, and then dried with hot air at about 130°C for 1 minute or so to form an active material layer, and the average thickness of the active material layer (excluding the current collector layer thickness) was measured.

By repeating the above operation, a graph of the average thickness relation of the active material layer according to the loading amount of the composition for the positive electrode active material layer was prepared. This graph is shown in Figure 3. The relation was illustrated as $y=a_1x+a_2$, which was a linear function graph of Figure 3 (a function by a trend line). When $R^2$ was 0.98 or more, the $a_1$ was about 0.1516, and the a2 was about 12.62.

## Test Example 2. Maximum length data of overlapping region

The composition for the positive electrode active material layer was applied in any one loading amount within the range of about 100 mg to 700 mg on an aluminum current collector layer having an area of 25 cm$^2$, and the composition for the insulation layer was again applied thereto so that the active material layer (20) and the insulating layer (30) were formed on the current collector layer (10), as shown in Figure 1. Subsequently, they were dried with hot air at 130°C for 1 minute or so to form the active material layer and the insulating layer (average thickness: P1 $\mu$m).

In the above state, the length ($L_s$ of Figure 4) (the maximum length of the overlapping region) of the inclined surface portion formed at the end of the active material layer was measured. By repeating the above process while changing the loading amount of the composition for the positive electrode active material layer within the range of about 100 mg to 700 mg, the maximum length data of the overlapping region according to the loading amount of the composition for the active material layer per unit area was obtained when the average thickness of the insulating layer was P1 $\mu$m. This result is shown in Figure 5. The results in Figure 5 are data obtained in the same manner as the data which is obtained by the above method, but with the average thickness of the insulating layer set differently to P1 $\mu$m, P2 $\mu$m, and P3 $\mu$m (P1, P2 and P3 are different constants). In the respective average thicknesses of the insulating layer, the data was expressed in the form of $y=a_3\ln(x)+a_4$ ($a_3$ and $a_4$ are constants) as a logarithmic function (a function by a trend curve). Specifically, when the average thickness P1 of the insulating layer is 15, $a_3$ is about +1.5686, and $a_4$ is about - 6.786; when P2 is 20, as is about +1.5725, and $a_4$ is about -7.379; and when P3 is 25, $a_3$ is about +1.5748, and $a_4$ is about -7.836. In all the above data, $R^2$ is 0.98 or more. The data in Figure 5 is representative of the case where the thickness of the insulating layer is set to P1 $\mu$m, P2 $\mu$m, and P3 $\mu$m, where with regard to the maximum length data of the overlapping region according to the loading amount of the composition for the active material layer per unit area for each specific thickness of the insulating layer, in order to determine the maximum average thickness of the insulating layer, data at thicknesses of the insulating layer different from the P1 $\mu$m, P2 $\mu$m and P3 $\mu$m thicknesses can be obtained equally.

## Test Example 3. Ratio ($T_{ax}/T_a$) data of thickness ($T_{ax}$) of active material layer according to distance along direction of active material layer from insulating layer in overlapping region to average thickness ($T_a$) of active material layer

The composition for the positive electrode active material layer was applied on an aluminum current collector layer having an area of 25 cm$^2$, and dried with hot air at about 130°C for 1 minute to form an active material layer.

At one point of both ends of the active material layer, a place with a height of 0 (place where the active material layer starts) was designated as an origin point ($X_0$), and the ratio ($T_{ax}/T_a$) of the thickness ($T_{ax}$) of the active material layer according to the distance from the origin point in the direction toward the center of the active material layer to the average thickness ($T_a$) of the active material layer was measured.

The above measurement was repeated while changing the loading amount of the composition for the positive electrode active material layer, and the result was graphed (function by trend curve).

The related results were shown in Figure 7, and the graph was shown in the form of $y=a_5+a_6\times\exp(a_7\times x)$ (as, $a_6$ and $a_7$ are constants) as an exponential function. Here, as was about +1.00219, $a_6$ was about -0.7514, $a_7$ was about -0.49972, and $R^2$ was 0.98 or more.

Considering this result, Equation 5 above can be derived as Equation A below.

### [Equation A]

$$T_{max}=T_a\times\{a\times\exp(b\times L)-c\}$$

In Equation A, $T_a$ is the average thickness of the active material layer, L is the maximum length of the overlapping region, a is about 0.7514, b is about -0.4992, and c is about 0.00219.

**Example 1.**

**Determination of maximum average thickness in insulating layer**

An electrode was designed in which an average thickness of an active material layer was about 93 $\mu$m and a maximum length of an overlapping region was 0.5 mm. According to the results of Test Example 1, the loading amount of the composition for the active material layer per unit area (25 cm$^2$) for securing the average thickness of 93 $\mu$m is about 530 mg.

When calculated by substituting 0.5mm as L and 93 $\mu$m as Ta in Equation A, which is the result obtained in Test Example 3, it is confirmed that the maximum average thickness ($T_{max}$) of the insulating layer is about 54.2 $\mu$m or so.

**Preparation of electrode**

An electrode was manufactured according to the above-designed contents. As described above, when considering the results of Test Example 1 and Figure 3, the loading amount of the composition for the active material layer for securing a thickness of 93 $\mu$m is about 530 mg/25cm$^2$ or so.

The composition for the active material layer was applied in the above loading amount to an aluminum foil with a thickness of about 20 $\mu$m as a current collector layer. Subsequently, the composition for the insulating layer was applied thereto so that while the length of the overlapping region with the composition for the active material layer was about 0.5 mm or less, the average thickness ($T_L$) of the insulating layer was about 20 $\mu$m or so.

Subsequently, the composition for the active material layer and the insulating layer composition as applied were dried with hot air at about 130°C for 1 minute, and a positive electrode was manufactured through a rolling process. Figure 9 is an SEM image of the positive electrode thus formed (size of scale bar: 50 $\mu$m, acceleration voltage: 2.0 kV, working distance: 8.1 mm and magnification: ×400), and it can be seen that the average thickness of the active material layer is about 93 $\mu$m or so. In addition, the real length of the overlapping region in this electrode was about 0.2 mm to 0.3 mm.

In addition, as a result of examining the electrode through the above process, no damage to the current collector layer occurred even after rolling, and the exposed portion of the current collector layer was not confirmed as it was stably overlapped in the boundary region between the insulating layer and the active material layer.

**Example 2.**

**Determination of maximum average thickness in insulating layer**

An electrode was designed in which an average thickness of an active material layer was about 46 $\mu$m and a maximum length of an overlapping region was 0.5 mm. According to the results of Test Example 1, the loading amount of the composition for the active material layer per unit area (25 cm$^2$) for securing the average thickness of 46 $\mu$m is about 220 mg.

Subsequently, according to the method of Test Example 2, the maximum average thickness of the insulating layer was determined. Specifically, in the result of Figure 5 obtained in Test Example 2, when 220 is substituted for the x value and 0.5 is substituted for the y value, it is confirmed that the maximum average thickness ($T_{max}$) of the insulating layer (30) is within the range of about 25 $\mu$m or more to less than 40 $\mu$m.

**Preparation of electrode**

An electrode was manufactured according to the above-designed contents. As described above, when considering the results of Test Example 1 and Figure 3, the loading amount of the composition for the active material layer for securing a thickness of 46 $\mu$m is about 220 mg/25cm$^2$ or so.

The composition for the active material layer was applied in the above loading amount to an aluminum foil with a thickness of about 20 $\mu$m as a current collector layer. Subsequently, the composition for the insulating layer was applied thereto so that while the length of the overlapping region with the composition for the active material layer was about 0.5 mm or less, the average thickness ($T_L$) of the insulating layer was about 20 $\mu$m or so.

Subsequently, the composition for the active material layer and the insulating layer composition as applied were dried with hot air at about 130°C for 1 minute, and a positive electrode was manufactured through a rolling process.

In addition, as a result of examining the electrode through the above process, no damage to the current collector layer occurred even after rolling, and the exposed portion of the current collector layer was not confirmed as it was stably overlapped in the boundary region between the insulating layer and the active material layer.

**Comparative Example 1.**

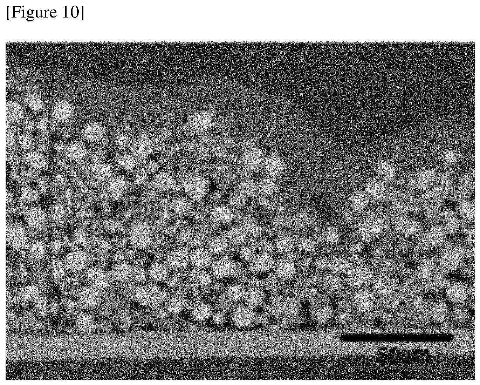

A positive electrode was manufactured in the same manner as in Example 1, except that the composition for the insulating layer was applied thereto so that the average thickness ($T_L$) of the insulating layer was 60 $\mu$m. A portion including the overlapping region of the positive electrode manufactured according to Comparative Example 1 was shown in Figure 10 (SEM image (size of scale bar: 50 $\mu$m, acceleration voltage: 2.0 kV, working distance: 8.1 mm, and magnification: ×400)). Referring to Figure 10, it can be seen that a fat edge phenomenon occurs in which the combined thickness (about 121 $\mu$m) of the overlapped active material layer and insulating layer is thicker than the active material layer (about 93 $\mu$m) in the portion corresponding to the overlapping region.

In the case of the electrode of Comparative Example 1, the current collector layer was severely damaged after the rolling process. As a result, Comparative Example 1 caused a decrease in battery characteristics and a safety problem.

**Comparative Example 2.**

A positive electrode was manufactured in the same manner as in Example 1, except that the composition for the insulating layer was applied thereto so that the average thickness ($T_L$) of the insulating layer was 9 $\mu$m. In this case, it was confirmed that the overlapping region of the insulating layer and the active material layer was not effectively formed, and the current collector layer was exposed at the boundary, which was very disadvantageous in terms of stability.

[Explanation of Reference Numerals]

    10: current collector layer

    20: electrode active material layer

    30: insulating layer

**Claims**

1. An electrode comprising:

    a current collector layer;
    an electrode active material layer formed on the current collector layer; and
    an insulating layer formed on the current collector layer; wherein
    the electrode active material layer and the insulating layer form a region overlapping each other, while being formed side by side along a direction perpendicular to the surface normal direction of the current collector layer, and
    the thickness of the insulating layer satisfies the relation of Equation 1 below:

[Equation 1]

$$T_L \leq T_S \times \{a \times \exp(b \times L) - c\}$$

wherein, $T_L$ is the thickness of the insulating layer, Ts is the thickness of the active material layer, L is the length of the overlapping region, a is a number within a range of 0.55 to 0.95, b is a number within a range of -0.8 to -0.2, and c is a number within a range of 0.001 to 0.004.

2. The electrode according to claim 1, further satisfying Equation 2 below:

[Equation 2]

$$0.1 \times T_S \leq T_L$$

wherein, $T_L$ is the thickness of the insulating layer, and Ts is the thickness of the active material layer.

3. The electrode according to claim 1, further satisfying Equation 3 below:

[Equation 3]

$$T_S = d \times L_D + e$$

wherein, $L_D$ is the loading amount (unit: mg/25cm$^2$) of the active material layer, d is a number within a range of 0.1 to 0.2, and e is a number within a range of 10 to 16.

4. The electrode according to claim 1, wherein the thickness $T_s$ of the active material layer is in the range of 50$\mu$m to 300$\mu$m.

5. The electrode according to claim 1, wherein the length of the overlapping portion is in the range of 0.01 mm to 2 mm.

6. The electrode according to claim 1, wherein the active material layer comprises polyvinylidene fluoride as a binder, and the insulating layer comprises styrene butadiene rubber or styrene butadiene latex as a binder.

7. The electrode according to claim 1, wherein the active material layer comprises polyvinylidene fluoride as a binder, and the insulating layer comprises polyvinylidene fluoride as a binder.

8. The electrode according to claim 6 or 7, wherein the insulating layer further comprises a ceramic.

9. The electrode according to claim 8, wherein the ceramic is one or more selected from the group consisting of AlO(OH), $Al_2O_3$, $SiO_2$, $TiO_2$, $SnO_2$, $CeO_2$, MgO, NiO, CaO, ZnO, $ZrO_2$, $Y_2O_3$, $SrTiO_3$, $BaTiO_3$ and $Mg(OH)_2$.

10. A method of manufacturing an electrode comprising steps of:

applying a composition for an electrode active material layer on a current collector layer; and
applying a composition for an insulating layer on the current collector layer, wherein
the composition for the electrode active material layer and the composition for the insulating layer are applied thereto so that the electrode active material layer and the insulating layer form a region overlapping each other, while being formed side by side along a direction perpendicular to the surface normal direction of the current collector layer, and
the composition for the insulating layer is applied to a thickness satisfying Equation 4 below:

[Equation 4]

$$T_L \leq T_{max}$$

wherein, $T_{max}$ is the maximum average thickness of the insulating layer, and $T_L$ is the coating thickness of the composition for the insulating layer.

11. The method of manufacturing an electrode according to claim 10, wherein the maximum average thickness of the insulating layer is determined according to the average thickness of the electrode active material layer and the maximum overlapping region.

12. The method of manufacturing an electrode according to claim 10, wherein $T_{max}$ of Equation 4 is determined according to Equation 5 below:

[Equation 5]

$$T_{max} = T_a \times \{a \times \exp(b \times L) - c\}$$

wherein, $T_a$ is the average thickness of the active material layer, L is the maximum length of the overlapping region, a is a number within a range of 0.55 to 0.95, b is a number within a range of -0.8 to -0.2, and c is a number within a range of 0.001 to 0.004.

13. The method of manufacturing an electrode according to claim 10, wherein the composition for the active material layer comprises polyvinylidene fluoride as a binder, and the composition for the insulating layer comprises styrene butadiene rubber or styrene butadiene latex as a binder.

14. The method of manufacturing an electrode according to claim 10, wherein the composition for the active material layer comprises polyvinylidene fluoride as a binder, and the composition for an insulating layer comprises polyvinylidene fluoride as a binder.

15. The method of manufacturing an electrode according to claim 13 or 14, wherein the composition for the insulating layer further comprises a ceramic.

16. The method of manufacturing an electrode according to claim 15, wherein the ceramic is one or more selected from the group consisting of AlO(OH), $Al_2O_3$, $SiO_2$, $TiO_2$, $SnO_2$, $CeO_2$, MgO, NiO, CaO, ZnO, $ZrO_2$, $Y_2O_3$, $SrTiO_3$, $BaTiO_3$ and $Mg(OH)_2$.

17. An electrode assembly comprising: a negative electrode; a positive electrode; and a separator, wherein

the negative electrode and the positive electrode are laminated with the separator interposed therebetween, and
at least one of the negative electrode and the positive electrode is the electrode according to claim 1.

18. A secondary battery comprising the electrode of claim 1.

[Figure 1]

[Figure 2]

[Figure 3]

[Figure 4]

[Figure 5]

$$y = a_3 ln(x) + a_4$$

[Figure 6]

[Figure 7]

$y = a_5 + a_6 \times exp(a_7 \times x)$

Distance to direction to active material layer from insulating layer, x

[Figure 8]

Loading amount (mg/25cm²) of active material composition per unit area, x

[Figure 9]

[Figure 10]

## INTERNATIONAL SEARCH REPORT

| International application No. |
| --- |
| **PCT/KR2022/010348** |

**A. CLASSIFICATION OF SUBJECT MATTER**

**H01M 4/04**(2006.01)i; **H01M 10/42**(2006.01)i; **B05C 11/10**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/04(2006.01); H01G 9/058(2006.01); H01M 10/04(2006.01); H01M 10/052(2010.01); H01M 10/0587(2010.01); H01M 2/26(2006.01); H01M 2/34(2006.01); H01M 4/13(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 (electrode), 집전체층 (collector layer), 절연층 (insulating layer), 두께 (thickness), 2차전지 (secondary battery), 팻엣지 (fat edge), 중첩 (overlap)

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2019-0093524 A (LG CHEM, LTD.) 09 August 2019 (2019-08-09)<br>See abstract; paragraph [0110]; claims 1-10 and 15; and figure 1. | 1-18 |
| A | KR 10-2004-0076831 A (SANYO ELECTRIC CO., LTD.) 03 September 2004 (2004-09-03)<br>See entire document. | 1-18 |
| A | JP 2017-135110 A (LG CHEM LTD.) 03 August 2017 (2017-08-03)<br>See entire document. | 1-18 |
| A | JP 2011-216403 A (HITACHI VEHICLE ENERGY LTD.) 27 October 2011 (2011-10-27)<br>See entire document. | 1-18 |
| A | JP 2011-176142 A (TDK CORP.) 08 September 2011 (2011-09-08)<br>See entire document. | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **31 October 2022** | **01 November 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2022/010348**

| Patent document cited in search report | | | Publication date (day/month/year) | Patent family member(s) | | | Publication date (day/month/year) |
|---|---|---|---|---|---|---|---|
| KR | 10-2019-0093524 | A | 09 August 2019 | CN | 111566850 | A | 21 August 2020 |
| | | | | EP | 3723166 | A1 | 14 October 2020 |
| | | | | EP | 3723166 | A4 | 20 January 2021 |
| | | | | KR | 10-2264738 | B1 | 15 June 2021 |
| | | | | US | 2020-0373558 | A1 | 26 November 2020 |
| | | | | WO | 2019-151833 | A1 | 08 August 2019 |
| KR | 10-2004-0076831 | A | 03 September 2004 | CN | 1525591 | A | 01 September 2004 |
| | | | | CN | 1525591 | C | 09 July 2008 |
| | | | | JP | 2004-259625 | A | 16 September 2004 |
| | | | | JP | 4201619 | B2 | 24 December 2008 |
| | | | | TW | 200421651 | A | 16 October 2004 |
| | | | | TW | 233709 | A | 01 June 2005 |
| | | | | TW | 233709 | B | 01 June 2005 |
| | | | | TW | I233709 | B | 01 June 2005 |
| | | | | US | 2004-0202928 | A1 | 14 October 2004 |
| | | | | US | 7258948 | B2 | 21 August 2007 |
| JP | 2017-135110 | A | 03 August 2017 | JP | 6587157 | B2 | 09 October 2019 |
| JP | 2011-216403 | A | 27 October 2011 | JP | 5417241 | B2 | 12 February 2014 |
| JP | 2011-176142 | A | 08 September 2011 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210092788
- KR 1020220087346

- WO 2014142458 A